(19) Europäisches Patentamt
European Patent Office
Office européen des brevets

(11) EP 3 118 285 B1

(12) EUROPEAN PATENT SPECIFICATION

(45) Date of publication and mention of the grant of the patent:
**24.01.2018 Bulletin 2018/04**

(51) Int Cl.:
***C10M 141/10*** (2006.01)

(21) Application number: **16177901.2**

(22) Date of filing: **05.07.2016**

(54) **METHOD OF IMPROVING VEHICLE TRANSMISSION OPERATION THROUGH USE OF SPECIFIC LUBRICANT COMPOSITIONS**

VERFAHREN ZUR VERBESSERUNG DES FAHRZEUGGETRIEBEBETRIEBS DURCH VERWENDUNG VON SPEZIFISCHEN SCHMIERMITTELZUSAMMENSETZUNGEN

PROCÉDÉ D'AMÉLIORATION DE L'OPÉRATION DE TRANSMISSION DE VÉHICULE GRÂCE À L'UTILISATION DE COMPOSITIONS LUBRIFIANTES SPÉCIFIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.07.2015 US 201514800791**

(43) Date of publication of application:
**18.01.2017 Bulletin 2017/03**

(73) Proprietor: **Infineum International Limited**
**Abingdon,**
**Oxfordshire OX13 6BB (GB)**

(72) Inventors:
- **KIM, Hahnsoo**
  **Linden, NJ 07036 (US)**
- **GORDA, Keith Raymond**
  **Linden, NJ 07036 (US)**
- **WATTS, Raymond**
  **Linden, NJ 07036 (US)**

(74) Representative: **Capaldi, Michael Joseph et al**
**P.O. Box 1**
**Milton Hill**
**Abingdon, Oxfordshire OX13 6BB (GB)**

(56) References cited:
**EP-A1- 2 837 675**
**US-A1- 2009 005 277**
**US-A1- 2012 264 665**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 118 285 B1

## Description

This invention relates to a method of improving vehicle transmission operation through the use of a specific power transmission fluid composition, and particularly to a method of improving a transmission incorporating a lubricated wet clutch. Suitable transmissions include stepped automatic transmissions, continuously variable transmissions and dual clutch transmissions. Vehicles equipped with these transmissions and lubricants have improved fuel efficiency. The invention also relates to specific power transmission fluids and to a method and a use for improving the dynamic friction performance of a wet clutches, more specifically slipping torque convertor clutches.

The continuing search for improved energy efficiency (*i.e.* fuel economy), overall reliability and freedom from maintenance means that lubricants used within vehicles, such as engine oils, transmission fluids, differential oils and the like, all need to be capable of reducing energy losses in lubricated contacts and meeting their lubrication requirements for longer and longer periods of time. While the practice with engine oils still remains to have a reasonable drain interval, *e.g.* 5,000 or 7,500 miles, the trend for transmission fluids and differential oils is to have them be '*fill-for-life'* which is commonly defined as more than 100,000 miles, frequently more than 150,000 miles of vehicle operation. This means that these lubricants must not only provide appropriate friction characteristics in wet clutches when the transmission is new but maintain those characteristics for the life of the vehicle.

Reduction of energy consumption in lubricated contacts translates directly to savings in fuel consumption and reduction in emissions, particularly $CO_2$. For this reason lubricants that reduce energy consumption are of great interest to vehicle manufacturers. Conventionally, reduction of energy consumption is approached by reduction of the lubricant viscosity. Reduction of lubricant viscosity has practical limits. At some point lubricant films can no longer support the load in the contact and some type of wear or other destructive process is initiated.

Essentially all vehicle "automatic transmissions" contain wet lubricated clutches. "Automatic transmissions" are defined as those transmissions capable of being used in a vehicle without a mechanically operated dry clutch coupling the transmission to the engine. They would include, stepped automatic transmissions, dual clutch transmissions, continuously variable transmissions, some automated manual transmissions and some hybrid transmissions. Wet clutches are used to transmit torque, and therefore energy, through the transmission in a specific path, *i.e.* gear ratio. They normally consist of paper composite plates interleaved with steel plates that act like a switch, either sending torque thorough the clutch to a specific set of gearing, or interrupting the flow of torque in that pathway. The lubrication of these clutches is very critical as the lubricant removes heat from the clutch but more importantly ultimately controls the frictional characteristics of that clutch. High stable dynamic friction is critical to successful clutch operation as the level of dynamic friction ultimately determines the size of the clutch for a particular application. High dynamic friction allows the use of smaller clutches with less surface area. This saves space and weight in the transmission, ultimately contributing to the fuel efficiency of the vehicle.

A slipping torque converter clutch is a specific type of wet lubricated clutch. They are useful in reducing the energy wasted in torque converters. Providing the precise frictional properties required by a torque converter clutch is also key to maintaining the overall fuel economy of the vehicle. There are two aspects to the successful control of friction in wet clutches used in transmission systems. One is the dynamic friction, referred to as $\mu_d$, which is friction developed at high relative sliding speeds between the steel and paper composite elements of the clutch. In practice, these relative speeds can be 5,000 rpm or higher. The second aspect of friction control is low speed friction. This is sometimes referred to as "mu-zero" ($\mu_0$) and is the friction coefficient as the relative speed between the two elements of the clutch approaches zero relative speed.

The ratio between the high speed friction coefficient and the low speed friction coefficient is referred to as $d\mu/dv$. That is the change in friction coefficient with speed or velocity. The range of velocity over which this ratio is measured needs to be specified. To provide acceptable friction properties in a slipping torque converter clutch the ratio of the friction coefficients over the range of speeds that the device operates, *i.e.* the $d\mu/dv$, must be positive. Most fluids that claim extended control of friction focus on the control of low speed friction. The control of low speed friction relies on the presence of molecules commonly referred to as friction modifiers. Friction modifiers are "small" molecules that have unique chemical structures consisting of polar head groups and long oleophilic hydrocarbon groups that when adsorbed to the friction plate surfaces reduce the relative friction between the sliding elements by creating a thick hydrocarbon layer. Extending the low speed friction control can be accomplished by finding molecules of greater thermal and oxidative stability or molecules with higher adsorption energy. Another approach is to find molecules that have finite capacity to reduce friction and therefore can be used in higher concentration. For example systems of this type are described in US 5,840,662 and us 5,840,663.

However in systems where the relationship between high speed friction and low speed friction is critical, control of high speed friction becomes a key performance parameter. Control of high speed friction is more difficult than the control of low speed friction as many more parameters come into play. More physical properties of the clutch elements become important in the quest to develop high and stable dynamic friction. Physical properties such as the porosity of the paper composite plate and roughness of the steel reaction plate are very important. If the porosity of the paper

composite plate decreases, or the roughness of the steel plate decreases the system will take on more hydrodynamic character and the high speed friction will decrease. The combination of chemistries used in the transmission fluid is critical in the development of dynamic friction. When the tribo-system moves from a hydrodynamic lubrication regime to a mixed and boundary regime, molecules in the fluid assemble in the shear field to form a "viscous" layer, which contributes to drag between the friction elements. This drag between the steel plate and paper composite plate is seen as increased friction. When the lubricant film collapses to simply boundary lubrication, at low sliding speeds, the organic friction modifiers exert their effect on friction control.

What has now been discovered is based on an improved transmission fluid with significantly improved dynamic friction stability. The usable friction life of the fluid is thereby increased.

The vehicle transmission of the present invention incorporates a wet clutch, or more preferably a slipping torque convertor clutch which is lubricated by a power transmission fluid. We have found that when the transmission fluid contains a particular type of compound which carries substituents made from particular alphaolefins, in combination with a friction modifier and an oil-soluble phosphorus compound, the transmission fluid has significantly improved dynamic friction stability, while also reducing the energy consumed in the lubricated contacts of the transmission; and thereby providing a vehicle equipped with the transmission with improved fuel efficiency.

Accordingly in a first aspect, the present invention provides a method for improving the dynamic friction performance of a wet clutch, said method comprising lubricating said clutch with a power transmission fluid comprising a major amount of a lubricating oil and a minor amount of an additive composition, said additive composition comprising:

(i) 0.1 to 10.0 mass percent, per mass of the fluid of a compound of structure (I):

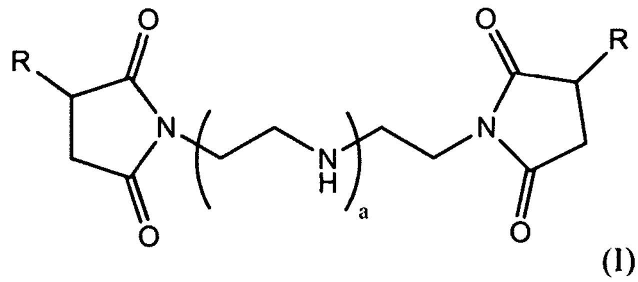

(I)

wherein a is an integer from 1 to 10 and R is a hydrocarbon group made by the metallocene-catalysed polymerisation of an alphaolefin feedstock, said feedstock being 1-octene, 1-decene, 1-dodecene or any mixture thereof;

(ii) 0.1 to 10.0 mass percent, per mass of the fluid of a friction modifier of structure (II):

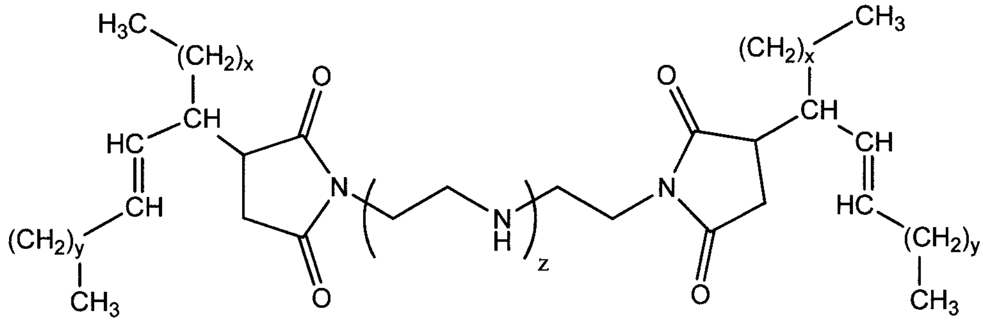

(II)

wherein x + y is from 8 to 15, and z = 0 or an integer from 1 to 5; and

(iii) an oil-soluble phosphorus compound comprising one or more compounds of the structures:

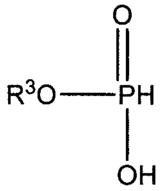

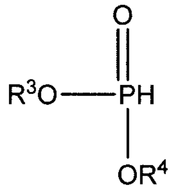

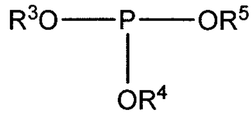

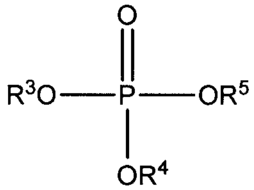

wherein groups $R^3$, $R^4$ and $R^5$ may be the same or different hydrocarbyl groups, or aryl groups, or linear alkyl groups optionally containing a thioether linkage and optionally where one or more of the oxygen atoms in the above structures may be replaced by a sulfur atom, in an amount such as to provide the power transmitting fluid with from 10 to 1000 parts per million by mass (ppm) of elemental phosphorus, per mass of the fluid.

In a second aspect, the present invention provides the use of a transmission fluid comprising a major amount of a lubricating oil and a minor amount of an additive composition, the additive composition comprising:

(i) 0.1 to 10.0 mass percent, per mass of the fluid of a compound of structure (I):

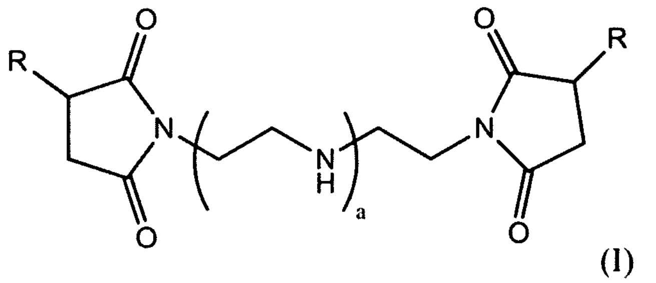

(I)

wherein a is an integer from 1 to 10 and R is a hydrocarbon group made by the metallocene-catalysed polymerisation of an alphaolefin feedstock, said feedstock being 1-octene, 1-decene, 1-dodecene or any mixture thereof;
(ii) 0.1 to 10.0 mass percent, per mass of the fluid of a friction modifier of structure (II):

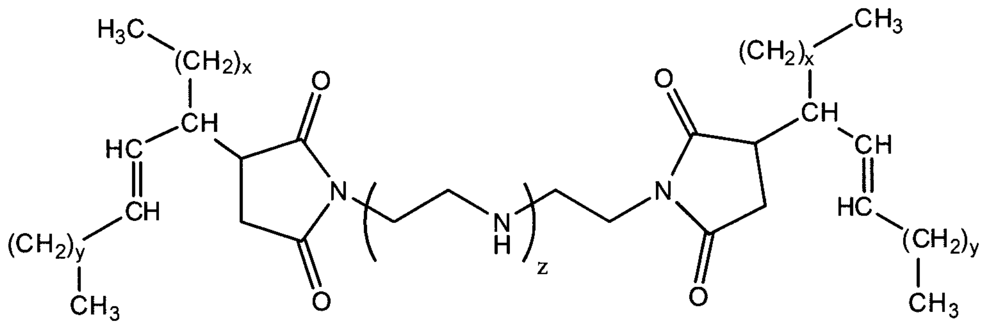

(II)

wherein x + y is from 8 to 15, and z = 0 or an integer from 1 to 5; and
(iii) an oil-soluble phosphorus compound comprising one or more compounds of the structures:

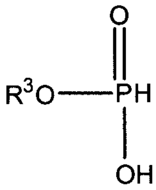

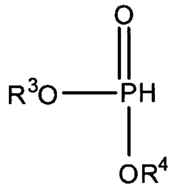

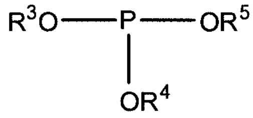

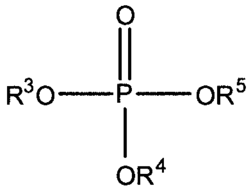

wherein groups $R^3$, $R^4$ and $R^5$ may be the same or different hydrocarbyl groups, or aryl groups, or linear alkyl groups optionally containing a thioether linkage and optionally where one or more of the oxygen atoms in the above structures may be replaced by a sulfur atom, in an amount such as to provide the power transmitting fluid with from 10 to 1000 parts per million by mass (ppm) of elemental phosphorus, per mass of the fluid; to improve the dynamic friction performance of a wet clutch lubricated by the transmission fluid.

Improvement in dynamic friction performance with regard to the first and second aspects can be determined by measurement of $d\mu/dv$ as set out hereinbelow.

With regard to all aspects, preferably the additive composition further comprises (iv) an ashless dispersant.

With regard to the first and second aspects, preferably the wet clutch is a slipping torque convertor clutch.

Fig. 1 compares the dynamic friction stability achieved by fluids of the present to the dynamic friction stability achieved by fluids of the prior art.

The invention will now be described in more detail where features described hereinbelow are to be understood as applicable to all aspects of the invention.

The groups R in the compound of structure (I) are made by a polymerisation reaction in which the corresponding alphaolefin feedstock is polymerised through the action of a metallocene catalyst. Such polyalphaolefins are known *per se,* and are sometimes referred to as "mPAO". These polymers possess a structure different from polyalphaolefins derived from other catalytic processes. In particular, the action of the metallocene catalyst is such as to cause the formation of a polymer having a narrow molecular weight distribution and a structure that embodies a high proportion of head-to-tail monomer unit additions, i.e. it can be regarded as an essentially ideal polymer. The literature for such materials also reports a more ordered pattern of hydrocarbon side-chains with fewer short side-chains than other processes. Another advantageous structural feature is that the polymers are formed having a high concentration of terminal unsaturation (vinylidene double bonds). This is beneficial to the reaction of the polymers with maleic anhydride which is a reaction step in the formation of compounds of structure (I). US 8,399,390 describes the formation of mPAO polymers suitable to form groups R in the compounds of structure (I).

The alphaolefin feedstock comprises 1-octene, 1-decene, 1-dodecene or any mixture thereof. The polymers preferably have a kinematic viscosity of from about 50 to about 500 $mm^2/s$ at 100°C.

The mPAO polymers are reacted with maleic anhydride to form substituted succinic anhydrides of the formula:

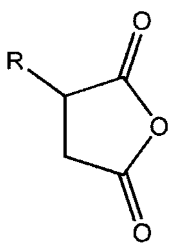

wherein R is as defined above. Synthetic methods to produce the substituted succinic anhydrides will be known to those skilled in the art.

The substituted succinic anhydrides are subsequently reacted with a polyalkylene polyamine in a ratio of approximately 2 moles of succinic anhydride to 1 mole of polyalkylene polyamine to produce compounds of formula (I). The objective is to react all of the primary amine groups on the polyamine with succinic anhydride thereby producing succinimides. Preferred polyalkylene polyamines are diethylene triamine, triethylene tetramine, tetraethylene pentamine

and heavy polyamine (H-PAM), which is a mixture of polyethylene polyamines having an average of 7 or more nitrogen atoms per molecule. Most preferred are tetraethyl pentamine and H-PAM. Synthetic methods to produce compounds of formula (I) will be known to those skilled in the art (see for example US2012/0264665 A1).

The following synthetic scheme illustrates the preparation of a compound of formula (I) where the group R is a hydrocarbon group made by the metallocene-catalysed polymerisation of 1-decene.

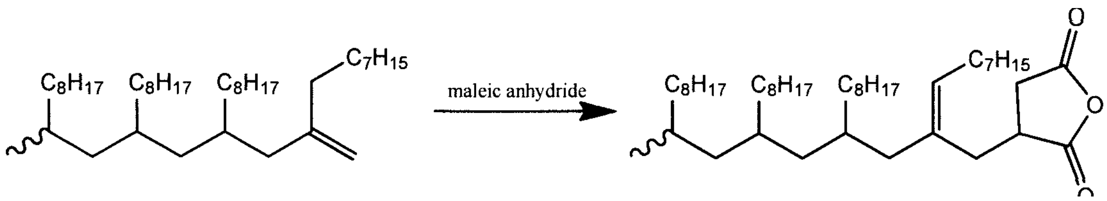


Step 1 - maleation

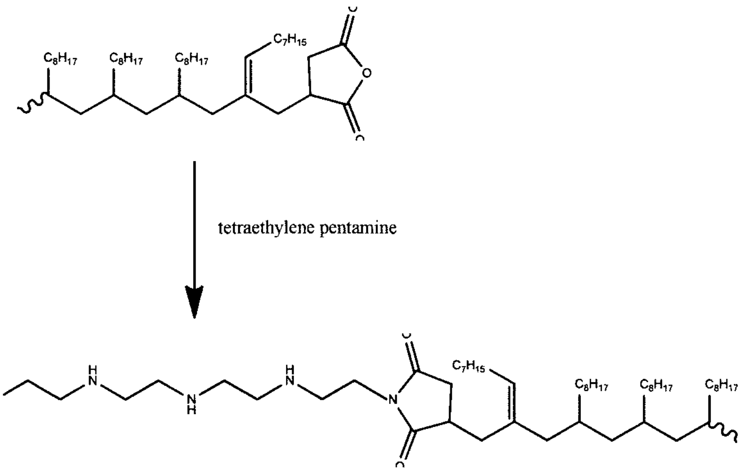


Step 2 - amination

The compounds of formula (I) are used at from 0.1 to 10.0 mass percent in the power transmission fluid, more preferably from 2.0 to 8.0 mass percent, and most preferably from 3.0 to 6.0 mass percent in the power transmission fluid.

The friction modifiers (ii) useful in the present invention are succinimides derived from polyethylene polyamines of structure (II):

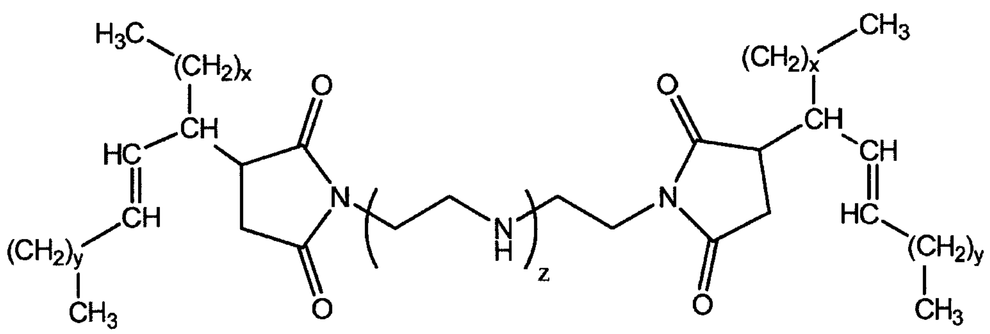

(II)

wherein x + y is from 8 to 15, and z = 0 or an integer from 1 to 5. Preferably x + y is 13 and z is either 0 or 3. Preparation of these friction modifiers is described in US 5,840,663.

The above succinimides may be post-reacted with acetic anhydride to form friction modifiers exemplified by the structure:

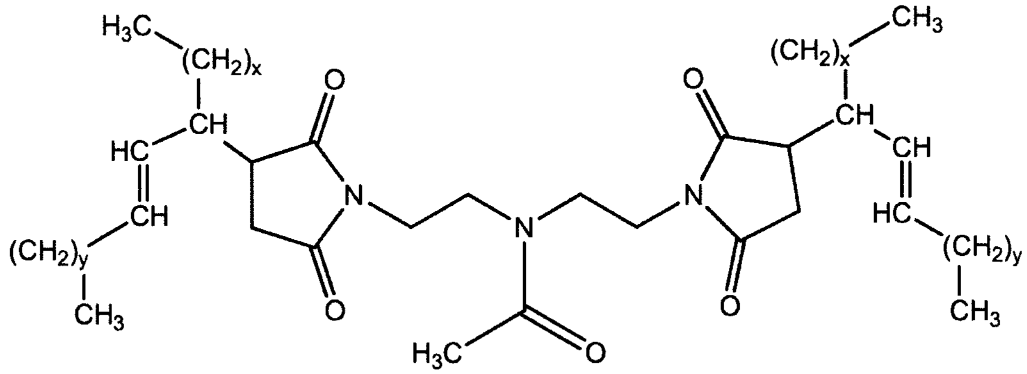

Preparation of this friction modifier is described in US2009/0005277. Post reaction with other reagents, e.g. borating agents is also known in the art.

These succinimide friction modifiers are used at from 0.1 to 10.0 mass percent in the transmission fluid, preferably from 0.5 to 6.0 mass percent, especially from 2.0 to 5.0 mass percent in the transmission fluid.

The oil-soluble phosphorus compound (iii) comprises one or more of the mono-, di- and tri-alkyl phosphites represented by the structures:

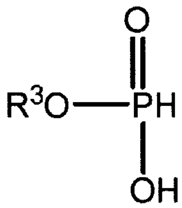

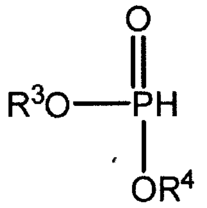

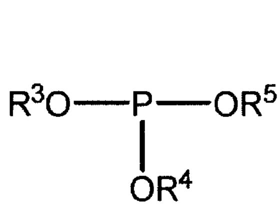

and the tri-alkyl phosphate represented by the structure:

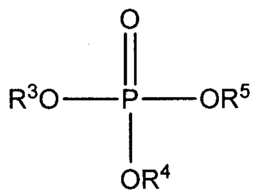

wherein groups $R^3$, $R^4$ and $R^5$ may be the same or different and may be hydrocarbyl groups as defined hereinabove or aryl groups such as phenyl or substituted phenyl. Additionally or alternatively, one or more of the oxygen atoms in the above structures may be replaced by a sulfur atom to provide other suitable phosphorus compounds.

Preferred oil-soluble phosphorus compounds (iii) are those where groups $R^3$ and $R^4$ and $R^5$ (when present) are linear alkyl groups such as butyl, octyl, decyl, dodecyl, tetradecyl and octadecyl and in a more preferred embodiment, the corresponding groups containing a thioether linkage. Branched groups are also suitable. Non-limiting examples of compounds (iii) include di-butyl phosphite, tributyl phosphite, di-2-ethylhexyl phosphite, tri-lauryl phosphite and tri-lauryl-tri-thio phosphite and the corresponding phosphites where the groups $R^3$ and $R^4$ and $R^5$ (when present) are 3-thio-heptyl, 3-thio-nonyl, 3-thio-undecyl, 3-thio-tridecyl, 5-thio-hexadecyl and 8-thio-octadecyl.The most preferred alkyl-phosphites for use as compound (ii) are those described in US 5,185,090 and US 5,242,612.

The amount of compound (iii) used will be such as to provide the power transmitting fluid with from 10 to 1000, preferably from 100 to 750, more preferably from 200 to 500 part per million by mass (ppm) of elemental phosphorus, per mass of the fluid.

Suitable as the ashless dispersant (iv) are polyisobutenyl succinimides, polyisobutenyl succinamides, mixed ester/amides of polyisobutenyl-substituted succinic acid, hydroxyesters of polyisobutenyl-substituted succinic acid, and Mannich condensation products of hydrocarbyl-substituted phenols, formaldehyde and polyamines. Mixtures of these dispersants can also be used.

Basic nitrogen-containing ashless dispersants are well-known lubricating oil additives and methods for their preparation are extensively described in the patent literature. Preferred dispersants are the polyisobutenyl succinimides and succinamides where the polyisobutenyl-substituent is a long-chain of preferably greater than 40 carbon atoms.

These materials are readily made by reacting a polyisobutenyl-substituted dicarboxylic acid material with a molecule containing amine functionality. Examples of suitable amines are polyamines such as polyalkylene polyamines, hydroxy-substituted polyamines and polyoxyalkylene polyamines. Preferred are polyalkylene polyamines such as tetraethylene pentamine and pentaethylene hexamine. Mixtures where the average number of nitrogen atoms per molecule is greater the 7 are also available. These are commonly called heavy polyamines or H-PAMs. These materials are commercially available under trade names such as "HPA" and "HPA-X" from DowChemical, "E-100" from Huntsman Chemical and others. Examples of hydroxy-substituted polyamines include N-hydroxyalkyl-alkylene polyamines such as N-(2-hydroxyethyl)ethylene diamine, N-(2-hydroxyethyl)piperazine, and N-hydroxyalkylated alkylene diamines of the type described in US 4,873,009. Examples of polyoxyalkylene polyamines typically include polyoxyethylene and polyoxypropylene diamines and triamines having average molecular weights in the range of 200 to 2,500. Products of this type are available under the Jeffamine trade mark.

As is known in the art, reaction of the amine with the polyisobutenyl-substituted dicarboxylic acid material (suitably an alkenyl succinic anhydride or maleic anhydride) is conveniently achieved by heating the reactants together in an oil solution. Reaction temperatures of 100 to 250°C and reaction times of 1 to 10 hours are typical. Reaction ratios can vary considerably but generally from 0.1 to 1.0 equivalents of dicarboxylic acid unit content is used per reactive equivalent of the amine-containing reactant.

Particularly preferred ashless dispersants are the polyisobutenyl succinimides formed from polyisobutenyl succinic anhydride and a polyalkylene polyamine such as tetraethylene pentamine or H-PAM. The polyisobutenyl group is derived from polyisobutene and preferably has a number average molecular weight (Mn) in the range 750 to 5,000, for example 900 to 2,500. As is known in the art, the dispersants may be post treated (e.g. with a boronating agent or an inorganic acid of phosphorus). Suitable examples are given in US 3,254,025, US 3,502,677 and US 4,857,214.

When used, ashless dispersants (iv) can be used in any effective amount however they are typically used in amounts from about 0.1 to 10.0 % by mass based on the mass of the transmission fluid, preferably from 0.5 to 7.0 % by mass, most preferably from 1.0 to 5.0 mass %.

In addition to the required constituents (i), (ii) and (iii), and constituent (iv) if used, the transmission fluid may contain one or more corrosion inhibitors. These may be used to reduce the corrosion of metals such as copper and are often alternatively referred to as metal deactivators or metal passivators. Suitable corrosion inhibitors are nitrogen and/or sulfur containing heterocyclic compounds such as triazoles (e.g. benzotriazoles), substituted thiadiazoles, imidazoles, thiazoles, tetrazoles, hydroxyquinolines, oxazolines, imidazolines, thiophenes, indoles, indazoles, quinolines, benzoxazines, dithiols, oxazoles, oxatriazoles, pyridines, piperazines, triazines and derivatives of any one or more thereof. A preferred corrosion inhibitor is a benzotriazole represented by the structure:

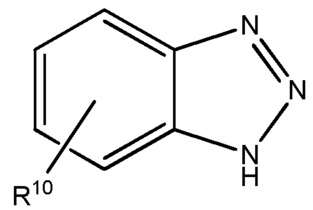

wherein $R^{10}$ is absent or is a $C_1$ to $C_{20}$ hydrocarbyl or substituted hydrocarbyl group which may be linear or branched, saturated or unsaturated. It may contain ring structures that are alkyl or aromatic in nature and/or contain heteroatoms such as N, O or S. Examples of suitable compounds are benzotriazole, alkyl-substituted benzotriazoles (e.g. tolyltriazole, ethylbenzotriazole, hexylbenzotriazole, octylbenzotriazole, etc.), aryl substituted benzotriazole and alkylaryl- or arylalkyl-substituted benzotriazoles. Preferably, the triazole is a benzotriazole or an alkylbenzotriazole in which the alkyl group contains from 1 to about 20 carbon atoms, preferably 1 to about 8 carbon atoms. Benzotriazole and tolyltriazole are particularly preferred.

Another preferred corrosion inhibitor is a substituted thiadiazoles represented by the structure:

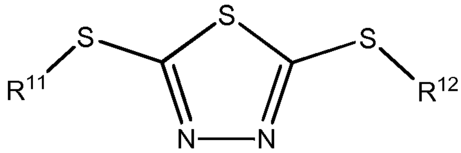

wherein $R^{11}$ and $R^{12}$ are independently hydrogen or a hydrocarbon group, which group may be aliphatic or aromatic, including cyclic, alicyclic, aralkyl, aryl and alkaryl. These substituted thiadiazoles are derived from the 2, 5-dimercapto-1, 3, 4-thiadiazole (DMTD) molecule. Many derivatives of DMTD have been described in the art, and any such compounds

can be included in the transmission fluid used in the present invention. US 2,719,125, US 2,719,126 and 3,087,937 describe the preparation of various 2, 5-bis-(hydrocarbon dithio)-1, 3, 4-thiadiazoles.

Also useful are other derivatives of DMTD. These include the carboxylic esters wherein $R^{11}$ and $R^{12}$ are joined to the sulfide sulfur atom through a carbonyl group. Preparation of these thioester containing DMTD derivatives is described in US 2,760,933. DMTD derivatives produced by condensation of DMTD with alpha-halogenated aliphatic monocarboxylic carboxylic acids having at least 10 carbon atoms is described in US 2,836,564. This process produces DMTD derivatives wherein $R^{11}$ and $R^{12}$ are HOOC-CH(R')- (R' being a hydrocarbyl group). DMTD derivatives further produced by amidation or esterification of these terminal carboxylic acid groups are also useful.

The preparation of 2-hydrocarbyldithio-5-mercapto-1,3,4-thiadiazoles is described in US 3,663,561.

A preferred class of DMTD derivatives are the mixtures of the 2-hydrocarbyldithio-5-mercapto-1, 3, 4-thiadiazoles and the 2, 5-bis-hydrocarbyldithio-1, 3, 4-thiadiazoles. Such mixtures are sold under the trade name Hitec 4313.

Corrosion inhibitors can be used in any effective amount however they are typically used in amounts from about 0.001 to 5.0 % by mass based on the mass of the transmission fluid, preferably from 0.005 to 3.0 % by mass, most preferably from 0.01 to 1.0 mass %.

The transmission fluids may also contain one or more metal-containing detergents. These are well known in the art and are exemplified by oil-soluble neutral or overbased salts of alkali or alkaline earth metals with one or more of the following acidic substances (or mixtures thereof): (1) sulfonic acids, (2) carboxylic acids, (3) salicylic acids, (4) alkyl phenols, (5) sulfurized alkyl phenols. The preferred salts of such acids from the cost-effectiveness, toxicological, and environmental standpoints are the salts of sodium, potassium, lithium, calcium and magnesium.

Oil-soluble neutral metal-containing detergents are those detergents that contain stoichiometrically equivalent amounts of metal in relation to the amount of acidic moieties present in the detergent. Thus, in general the neutral detergents will have a low basicity when compared to their overbased counterparts.

The term "overbased" in connection with metallic detergents is used to designate metal salts wherein the metal is present in stoichiometrically larger amounts than the organic radical. The commonly employed methods for preparing the over-based salts involve heating a mineral oil solution of an acid with a stoichiometric excess of a metal neutralizing agent such as the metal oxide, hydroxide, carbonate, bicarbonate, of sulfide at a temperature of about 50°C, and filtering the resultant product. The use of a "promoter" in the neutralization step to aid the incorporation of a large excess of metal likewise is known. Examples of compounds useful as the promoter include phenolic substances such as phenol, naphthol, alkyl phenol, thiophenol, sulfurized alkylphenol, and condensation products of formaldehyde with a phenolic substance; alcohols such as methanol, 2-propanol, octanol, Cellosolve alcohol, Carbitol alcohol, ethylene glycol, stearyl alcohol, and cyclohexyl alcohol; and amines such as aniline, phenylene diamine, phenothiazine, phenyl-beta-naphthylamine, and dodecylamine. A particularly effective method for preparing the basic salts comprises mixing an acid with an excess of a basic alkaline earth metal neutralizing agent and at least one alcohol promoter, and carbonating the mixture at an elevated temperature such as 60 to 200°C.

Examples of suitable metal-containing detergents include, but are not limited to, neutral and overbased salts of such substances as lithium phenates, sodium phenates, potassium phenates, calcium phenates, magnesium phenates, sulfurized lithium phenates, sulfurized sodium phenates, sulfurized potassium phenates, sulfurized calcium phenates, and sulfurized magnesium phenates wherein each aromatic group has one or more aliphatic groups to impart hydrocarbon solubility; lithium sulfonates, sodium sulfonates, potassium sulfonates, calcium sulfonates, and magnesium sulfonates wherein each sulfonic acid moiety is attached to an aromatic nucleus which in turn usually contains one or more aliphatic substituents to impart hydrocarbon solubility; lithium salicylates, sodium salicylates, potassium salicylates, calcium salicylates and magnesium salicylates wherein the aromatic moiety is usually substituted by one or more aliphatic substituents to impart hydrocarbon solubility; the lithium, sodium, potassium, calcium and magnesium salts of hydrolyzed phosphosulfurized olefins having 10 to 2,000 carbon atoms or of hydrolyzed phosphosulfurized alcohols and/or aliphatic-substituted phenolic compounds having 10 to 2,000 carbon atoms; lithium, sodium, potassium, calcium and magnesium salts of aliphatic carboxylic acids and aliphatic substituted cycloaliphatic carboxylic acids; and many other similar alkali and alkaline earth metal salts of oil-soluble organic acids. Mixtures of neutral or over-based salts of two or more different alkali and/or alkaline earth metals can be used. Likewise, neutral and/or overbased salts of mixtures of two or more different acids (e.g. one or more overbased calcium phenates with one or more overbased calcium sulfonates) can also be used.

As is well known, overbased metal detergents are generally regarded as containing overbasing quantities of inorganic bases, probably in the form of micro dispersions or colloidal suspensions. Thus the term "oil soluble" as applied to metallic detergents is intended to include metal detergents wherein inorganic bases are present that are not necessarily completely or truly oil-soluble in the strict sense of the term, inasmuch as such detergents when mixed into base oils behave much the same way as if they were fully and totally dissolved in the oil.

Collectively, the various metallic detergents referred to herein above, have sometimes been called, simply, neutral, basic or overbased alkali metal or alkaline earth metal-containing organic acid salts.

Methods for the production of oil-soluble neutral and overbased metallic detergents and alkaline earth metal-containing detergents are well known to those skilled in the art, and are extensively reported in the patent literature.

The metal-containing detergents can, if desired, be boronated neutral and/or overbased alkali of alkaline earth metal-containing detergents. Methods for preparing boronated metallic detergents are well known to those skilled in the art, and are extensively reported in the patent literature.

Preferred metallic detergents are overbased sulfurized calcium phenates, overbased calcium sulfonates, and overbased calcium salicylates.

Metal-containing detergents can be used in any effective amount however they are typically used in amounts from about 0.01 to 2.0 % by mass based on the mass of the transmission fluid, preferably from 0.05 to 1.0 % by mass, most preferably from 0.05 to 0.5 mass %.

Other additives known in the art may be added to the transmission fluids. These include other anti-wear agents, extreme pressure additives, anti-oxidants, viscosity modifiers and the like. They are typically disclosed in, for example, "Lubricant Additives" by C.V. Smallheer and R. Kennedy Smith, 1967, pp 1-11.

Components (i), (ii), (iii), and (iv) if used, together with other desired additives may be combined to form a concentrate. Typically the active ingredient (a.i.) level of the concentrate will range from 20 to 90 wt% of the concentrate, preferably from 25 to 80 wt%, for example 35 to 75 wt%. The balance of the concentrate is a diluent. Lubricating oils or compatible solvents form suitable diluents.

With regard to all aspects of the invention, the lubricating oil may be any suitable lubricating oil as known in the art. Suitable oils are those derived from natural lubricating oils, synthetic lubricating oils, and mixtures thereof. In general, both the natural and synthetic lubricating oil will each have a kinematic viscosity ranging from about 1 to about 100 $mm^2/s$ (cSt) at 100°C depending on the specification or quality of transmission fluid sought, although typical applications will require each oil to have a viscosity ranging from about 2 to about 8 $mm^2/s$ (cSt) at 100°C.

Natural lubricating oils include animal oils, vegetable oils (e.g., castor oil and lard oil), petroleum oils, mineral oils, and oils derived from coal or shale. The preferred natural lubricating oil is mineral oil.

Suitable mineral oils include all common mineral oil basestocks. This includes oils that are naphthenic or paraffinic in chemical structure. Oils that are refined by conventional methodology using acid, alkali, and clay or other agents such as aluminum chloride, or they may be extracted oils produced, for example, by solvent extraction with solvents such as phenol, sulfur dioxide, furfural, dichlordiethyl ether, etc. They may be hydrotreated or hydrofined, dewaxed by chilling or catalytic dewaxing processes, or hydrocracked. The mineral oil may be produced from natural crude sources or be composed of isomerized wax materials or residues of other refining processes.

Typically the mineral oils will have kinematic viscosities of from 2.0 $mm^2/s$ (cSt) to 10.0 $mm^2/s$ (cSt) at 100°C. The preferred mineral oils have kinematic viscosities of from 2 to 8 $mm^2/s$ (cSt), and most preferred are those mineral oils with viscosities of 3 to 6 $mm^2/s$ (cSt) at 100°C.

Synthetic lubricating oils include hydrocarbon oils and halo-substituted hydrocarbon oils such as oligomerized, polymerized, and interpolymerized olefins [e.g., polybutylenes, polypropylenes, propylene, isobutylene copolymers, chlorinated polylactenes, poly(1-hexenes), poly(1-octenes), poly-(1-decenes), etc., and mixtures thereof]; alkylbenzenes [e.g., dodecyl-benzenes, tetradecylbenzenes, dinonylbenzenes, di(2-ethylhexyl)benzene, etc.]; polyphenyls [e.g., biphenyls, terphenyls, alkylated polyphenyls, etc.]; and alkylated diphenyl ethers, alkylated diphenyl sulfides, as well as their derivatives, analogs, and homologs thereof, and the like.

The preferred oils from this class of synthetic oils are Group IV basestocks, i.e. polyalphaolefins (PAO), including hydrogenated oligomers of an alpha-olefin, particularly oligomers of 1-decene, especially those produced by free radical processes, Ziegler catalysis, or cationic catalysis.

The polyalphaolefins typically have viscosities in the range of 2 to 100 cSt at 100°C, preferably 4 to 8 cSt at 100°C. They may, for example, be oligomers of branched or straight chain alpha-olefins having from 2 to 16 carbon atoms, specific examples being polypropenes, polyisobutenes, poly-1-butenes, poly-1-hexenes, poly-1-octenes and poly-1-decene. Included are homopolymers, interpolymers and mixtures.

Synthetic lubricating oils also include alkylene oxide polymers, interpolymers, copolymers, and derivatives thereof where the terminal hydroxyl groups have been modified by esterification, etherification, etc. This class of synthetic oils is exemplified by: polyoxyalkylene polymers prepared by polymerization of ethylene oxide or propylene oxide; the alkyl and aryl ethers of these polyoxyalkylene polymers (e.g., methyl-polyisopropylene glycol ether having an average molecular weight of 1000, diphenyl ether of polypropylene glycol having a molecular weight of 1000 - 1500); and mono- and poly-carboxylic esters thereof (e.g., the acetic acid esters, mixed $C_3$ - $C_8$ fatty acid esters, and $C_{12}$ oxo acid diester of tetraethylene glycol).

Another suitable class of synthetic lubricating oils comprises the esters of dicarboxylic acids (e.g., phthalic acid, succinic acid, alkyl succinic acids and alkenyl succinic acids, maleic acid, azelaic acid, suberic acid, sebasic acid, fumaric acid, adipic acid, linoleic acid dimer, malonic acid, alkylmalonic acids, alkenyl malonic acids, etc.) with a variety of alcohols (e.g., butyl alcohol, hexyl alcohol, dodecyl alcohol, 2-ethylhexyl alcohol, ethylene glycol, diethylene glycol monoethers, propylene glycol, etc.). Specific examples of these esters include dibutyl adipate, di(2-ethylhexyl) sebacate, di-n-hexyl fumarate, dioctyl sebacate, diisooctyl azelate, diisodecyl azelate, dioctyl phthalate, didecyl phthalate, dieicosyl

sebacate, the 2-ethylhexyl diester of linoleic acid dimer, and the complex ester formed by reacting one mole of sebasic acid with two moles of tetraethylene glycol and two moles of 2-ethyl-hexanoic acid, and the like. A preferred type of oil from this class of synthetic oils is adipates of $C_4$ to $C_{12}$ alcohols.

Esters useful as synthetic lubricating oils also include those made from $C_5$ to $C_{12}$ monocarboxylic acids and polyols and polyol ethers such as neopentyl glycol, trimethylolpropane pentaerythritol, dipentaerythritol, tripentaerythritol, and the like.

The lubricating oils may be derived from refined, rerefined oils, or mixtures thereof. Unrefined oils are obtained directly from a natural source or synthetic source (e.g., coal, shale, or tar sands bitumen) without further purification or treatment. Examples of unrefined oils include a shale oil obtained directly from a retorting operation, a petroleum oil obtained directly from distillation, or an ester oil obtained directly from an esterification process, each of which is then used without further treatment. Refined oils are similar to the unrefined oils except that refined oils have been treated in one or more purification steps to improve one or more properties. Suitable purification techniques include distillation, hydrotreating, dewaxing, solvent extraction, acid or base extraction, filtration, and percolation, all of which are known to those skilled in the art. Rerefined oils are obtained by treating used oils in processes similar to those used to obtain the refined oils. These rerefined oils are also known as reclaimed or reprocessed oils and are often additionally processed by techniques for removal of spent additives and oil breakdown products.

Another class of suitable lubricating oils are those basestocks produced from oligomerization of natural gas feed stocks or isomerization of waxes. These basestocks can be referred to in any number of ways but commonly they are known as Gas-to-Liquid (GTL) or Fischer-Tropsch base stocks.

The lubricating oil may be a blend of one or more of the above described oils, and a blend of natural and synthetic lubricating oils (i.e., partially synthetic) is expressly contemplated under this invention.

In a third aspect, the present invention provides a transmission fluid comprising a major amount of a lubricating oil and a minor amount of an additive composition, wherein the additive composition comprises (i) 0.1 to 10.0 mass percent, per mass of the fluid of a compound of structure (I):

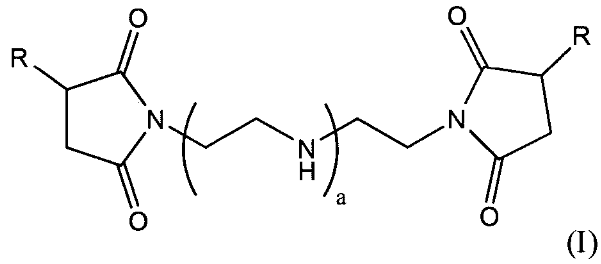

(I)

wherein a is an integer from 1 to 10 and R is a hydrocarbon group made by the metallocene-catalysed polymerisation of an alphaolefin feedstock, said feedstock being 1-octene, 1-decene, 1-dodecene or any mixture thereof; (ii) 0.1 to 10.0 mass percent, per mass of the fluid of a friction modifier of structure (II):

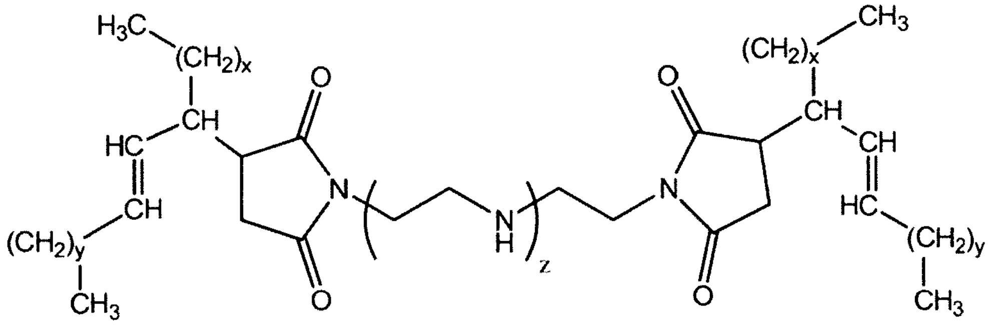

(II)

wherein x + y is from 8 to 15, and z = 0 or an integer from 1 to 5; and (iii) an oil-soluble phosphorus compound comprising one or more compounds of the structures:

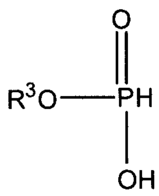

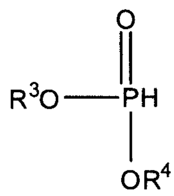

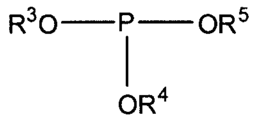

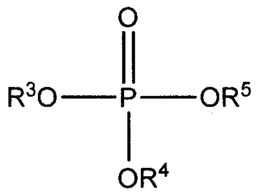

wherein groups $R^3$, $R^4$ and $R^5$ may be the same or different hydrocarbyl groups, or aryl groups, or linear alkyl groups optionally containing a thioether linkage and optionally where one or more of the oxygen atoms in the above structures may be replaced by a sulfur atom, in an amount such as to provide the power transmitting fluid with from 10 to 1000 parts per million by mass (ppm) of elemental phosphorus, per mass of the fluid.

All preferred features described hereinabove in relation to the first and second aspects of the invention are to be understood to be equally applicable to this third aspect.

The invention will now be described by way of non-limiting example only. Figure 1 shows the development of dynamic friction over time for a conventional power transmission fluid and two examples of fluids of use in the present invention.

PREPARATIVE EXAMPLES

Example 1 - synthesis of a compound of formula (I)

Step 1 - Polymerization of alphaolefin

Into a 500ml round bottomed, 4-necked flask fitted with a thermometer, magnetic stirrer, nitrogen sweep, and reflux condenser was added 20.1 grams of a 10% methylaluminoxane (MAO) solution in toluene (in a dry box). Following the addition of the MAO, 0.01 grams of bis-butyl dicyclopentadienyl zirconium dichloride was added and the apparatus was removed from the dry box. The reaction mixture was then cooled to 19°C with mixing and under nitrogen sweep. Once cooled, 1-decene was slowly added to the reaction flask via an addition funnel while maintaining the temperature between 15°C and 20°C. After 1-decene addition was complete, the reaction was maintained at 15°C for 3 hours. Afterwards, it was allowed to warm to room temperature where mixing was continued for another 16 hours. The reaction mixture was then quenched by adding 3 ml water and a copious amount of basic alumina. The mixture was filtered to remove the solids and then stripped on a rotary evaporator to remove the toluene and light ends. The yield of polyalphaolefin PAO was 46%. Kinematic viscosity was 111cSt at 100°C.

Step 2 - Maleation of the PAO

Into a round bottomed, 4-necked flask fitted with a thermometer, mechanical stirrer, nitrogen sweep, and an air-cooled condenser was placed 214 grams of the PAO made in Step 1 together with 21.5 grams of maleic anhydride. A slow nitrogen sweep was begun, the stirrer started and the mixture heated to reflux (200-220°C) where it was held for several hours. On completion, excess maleic anhydride was removed by nitrogen sparge and the crude product was vacuum filtered through celite. The polyalphaolefin-succinic anhydride product was isolated for use in Step 3.

Step 3 - Amination of the polyalphaolefin-succinic anhydride

A one liter round-bottomed, 4-necked flask was fitted with a thermometer, mechanical stirrer, nitrogen sweep, Dean Starke trap and water-cooled condenser. The flask was charged with the product of Step 3 and heated to 130°C under agitation and a nitrogen sweep. A commercial "Polyamine", HPA-X (from Dow chemical) was added slowly to the flask via an addition funnel in an amount equivalent to provide one mole of primary amine per mole of the anhydride product from Step 3. After addition, the temperature of the reaction mixture was increased to 170°C, where it was held

for three hours. The soak stage was followed by a 1 hour nitrogen sparge to remove residual water. The flask was cooled to yield a product having a nitrogen content of 1.22% by mass.

Example 2 - synthesis of compound of formula (I)

Example 1 was repeated to produce a further compound of formula (I). In this example, the 1-decene PAO produced in Step 1 had a kinematic viscosity of 65 $mm^2/s$ at 100°C. The final product of Step 3 had a nitrogen content of 1.72% by mass.

Example 3 - synthesis of compound of formula (I)

Example 1 was repeated to produce a further compound of formula (I). In this example, the 1-decene PAO produced in Step 1 had a kinematic viscosity of 150 $mm^2/s$ at 100°C. The final product of Step 3 had a nitrogen content of 1.25% by mass.

Example 4 - synthesis of oil-soluble phosphorus compound (iii)

Di-butyl phosphite (194 grams, 1 mole) was placed in a round-bottomed, 4-neck flask equipped with a reflux condenser, a stirring bar and a nitrogen bubbler. The flask was flushed with nitrogen, sealed and the stirrer started. The di-butyl phosphite was then heated to 150°C under vacuum (90 KPa) and maintained there while hydroxyethyl n-octyl sulfide (190 grams, 1 mole) of was added over about one hour. During the addition approximately 35 mls of butyl alcohol were recovered in a chilled trap. Heating was continued for about one hour after the addition of the hydroxyethyl n-octyl sulfide was completed, during which time no additional butyl alcohol was evolved. The reaction mixture was then cooled and analyzed for phosphorus and sulfur. The final product had a TAN of 115 and contained 8.4 % phosphorus and 9.1 % sulfur.

WORKED EXAMPLES

Example 5

Three test transmission fluids are prepared in a Group III mineral oil with the compositions shown in Table 1. The values given are the mass% of each component in the fluids.

**Table 1**

| **Component** | **Comparison** | **Fluid 1** | **Fluid 2** |
|---|---|---|---|
| (i) Product of Example 2 | - | 2.00 | - |
| (i) Product of Example 3 | - | - | 2.90 |
| (ii) Structure (II), x + y = 13, z = 1 | 3.30 | 3.30 | 3.30 |
| (ii) Structure (II), x + y = 13, z = 3 | 0.30 | 0.30 | 0.30 |
| (iii) Product of Example 4 | 0.40 | 0.40 | 0.40 |
| (iv) Ashless dispersant(*) | 1.60 | - | - |
| (iv) Ashless dispersant(#) | 0.75 | 1.15 | 1.15 |
| Other components | 3.09 | 3.09 | 3.09 |
| 3cSt Group III diluent oil | 5.56 | 4.76 | 3.86 |
| API Group III Base Stock | 82.00 | 82.00 | 82.00 |
| PMA viscosity modifier | 3.00 | 3.00 | 3.00 |
| **Total** | **100.00** | **100.00** | **100.00** |
| (*) polyisobutenyl succinimide formed from a polyisobutenyl succinic anhydride where the polyisobutenyl group has an Mn of around 2225 and HPA-X<br>(#) polyisobutenyl succinimide formed from a polyisobutenyl succinic anhydride where the polyisobutenyl group has an Mn of around 950 and HPA-X | | | |

The fluids of the invention, 'Fluid 1' and 'Fluid 2', were compared with a "Comparison" fluid. The Comparison fluid is representative of a conventional transmission fluid. The amounts of the products of Example 2 and Example 3 used in Fluid 1 and Fluid 2 were chosen so as to contribute the same nitrogen concentration to the transmission fluid as the combination of the two ashless dispersants used in the Comparison fluid. All three fluids contained the same concentrations of "Other Components" which were anti-oxidants, corrosion inhibitors and seal swell agents.

To evaluate friction stability, the fluids were assessed for their ability to prevent shudder in a slipping torque converter clutch. This property is often referred to as "Anti-Shudder Durability' and is measured in test hours to failure, where a failure is deemed to be a friction versus velocity, i.e. dμ/dv, gradient that is negative. The test used is described in the industry paper, R.F. Watts, R.K. Nibert and M. Tandon, "Anti-Shudder Durability of Automatic Transmission Fluids: Mechanism of the Loss of Shudder Control", 10th International Colloquium on Tribology, Technische Akademie Esslingen, presented: Ostfildern, Germany, January 1996. The test method can also be found in the Ford MERCON® V Specification, dated 1 Jan 1997, section 3.8.

Briefly, the method uses an SAE#2 machine that has been modified so that it can perform low speed sliding (200 rpm), speed ramps (0 - 300 rpm) and high speed engagements (3600 to 0 rpm). The machine is also fitted with an oxidation reservoir with a copper coupon, a pump to circulate test fluid from the reservoir to the test head and a sparger to add air to the test head. The machine is run alternating dynamic engagement cycles (20 repetitions) with continuous sliding (50 minutes) at temperatures of about 150°C. Periodically (every four hours) the dμ/dv is measure by ramping from 0 to 300 rpm and if the dμ/dv is positive the test is continued for another four hours. The dμ/dv is calculated by the equation below:

$$d\mu/dv = (\mu@1.2\ m/s - \mu@0.35\ m/s) / 0.85\ m/s$$

In the results which follow dμ/dv has been multiplied by 1000 to make whole numbers for ease of interpretation.

The three fluids from Table 1 were evaluated for anti-shudder durability. The test head was fitted with one, two-sided friction plate of Dynax D-600-02 friction material and two steel reaction plates. The system was filled with approximately 2500 ml of fluid and the test begun. The reservoir temperature was held at 145°C, which gave a test head temperature of approximately 155°C. Air was sparged into the test head at 50 cc/min. Every four hours the test fluid temperature was cooled to 60°C and the dμ/dv was measured as described above at 60°, 80° and 120°C. The results obtained from this testing are shown in Table 2.

**Table 2**

| | **Hours to failure** | | |
|---|---|---|---|
| **dμ/dv measured at:** | **60°C** | **80°C** | **120°C** |
| **Comparison** | 160 | 165 | 170 |
| **Fluid 1** | 325 | 335 | 345 |
| **Fluid 2** | 320 | 320 | 315 |

The anti-shudder durability of both Fluid 1 and Fluid 2 was significantly increased compared to the Comparison fluid. The useful friction life of the fluids was approximately doubled.

Fig. 1 shows the improved dynamic friction stability achieved by the invention. The dynamic friction of the Comparison example was constant only for about 75 hours and then started to decline quite rapidly. The dynamic friction given by Fluid 1 and Fluid 2 remained relatively constant for about 200 to 220 hours and then began a very gradual decline. So not only did Fluids 1 and 2 provide high dynamic friction for much longer than the Comparison fluid, their eventual loss in dynamic friction occurred at a much slower rate.

Example 6

The fuel efficiency of a passenger car incorporating a transmission of the invention was tested using the FTP 75 (or EPA 75) test procedure. This procedure is used by the automotive industry to determine corporate average fuel economy (CAFE) values for each vehicle.

Three test fluids (Fluid 3, Fluid 4 and Fluid 5) were prepared as detailed in Table 3 below. These were run in the FTP 75 fuel economy test together with the same Comparison fluid from Table 1. The values given in the top section of Table 3 are the mass% of each component in the fluids. The lower section of the table lists the viscometric properties of the fluids.

**Table 3**

| Component | Comparison | Fluid 3 | Fluid 4 | Fluid 5 |
|---|---|---|---|---|
| (i) Product of Example 2 | - | 3.60 | - | - |
| (i) Product of Example 3 | - | - | 2.60 | 3.60 |
| (ii) Structure (II), x + y = 13, z = 1 | 3.30 | 3.30 | 3.30 | 3.30 |
| (ii) Structure (II), x + y = 13, z = 3 | 0.30 | 0.30 | 0.30 | 0.30 |
| (iii) Product of Example 4 | 0.40 | 0.40 | 0.40 | 0.40 |
| (iv) Ashless dispersant(*) | 1.60 | - | - | - |
| (iv) Ashless dispersant(#) | 0.75 | 1.15 | 1.15 | 1.15 |
| Other components | 3.09 | 3.09 | 3.09 | 3.09 |
| 3cSt Group III diluent oil | 5.56 | 3.16 | 4.16 | 3.16 |
| API Group III Base Stock | 82.00 | 82.00 | 82.00 | 82.00 |
| PMA viscosity modifier | 3.00 | 3.00 | 3.00 | 3.00 |
| **Total** | **100.00** | **100.00** | **100.00** | **100.00** |
| | | | | |
| Kinematic viscosity at 100°C, $mm^2/s$ | 5.45 | 5.38 | 5.42 | 5.37 |
| Kinematic viscosity at 40°C, $mm^2/s$ | 23.7 | 25.1 | 25.3 | 24.7 |
| Viscosity Index | 178 | 156 | 157 | 160 |
| Viscosity at $10^6$ $sec^{-1}$ at 100°C, cP | 4.28 | 4.24 | 4.28 | 4.27 |
| (*) polyisobutenyl succinimide formed from a polyisobutenyl succinic anhydride where the polyisobutenyl group has an Mn of around 2225 and HPA-X<br>(#) polyisobutenyl succinimide formed from a polyisobutenyl succinic anhydride where the polyisobutenyl group has an Mn of around 950 and HPA-X | | | | |

As before, other than adjustments to the diluent oil, all three fluids contained the same concentrations of the same "Other Components" which comprised anti-oxidants, corrosion inhibitors and seal swell agents.

The fluids were formulated such that their viscometric properties were as close to one another as possible. This was done to eliminate any potential contribution to the fuel efficiency measurement due to viscosity differences.

All four fluids were run in the FTP 75 test cycle at an independent test laboratory certified to run the FTP 75 cycle for vehicle manufacturer CAFE qualification. The vehicle used was a 2013 Hyundai Azera equipped with a 3.3 liter V6 engine and 6 speed automatic transmission. Each test lubricant was run four times and the results shown in Table 4 are the average of the four determinations. The transmission was flushed extensively between test runs and flushed three times with the lubricant to be tested prior to taking the actual data. Table 4 below presents the data obtained from this testing.

**Table 4**

| | mpg | % improvement |
|---|---|---|
| **Comparison** | 23.29 | - |
| **Fluid 3** | 23.39 | 0.43 |
| **Fluid 4** | 23.40 | 0.48 |
| **Fluids** | 23.41 | 0.51 |

It is clear that Fluid 3, Fluid 4 and Fluid 5 all gave an advantage over the Comparison fluid in reducing the energy consumption of the vehicle transmission, as evidenced by a decrease in fuel consumption.

**Claims**

1. A method for improving the dynamic friction performance of a wet clutch, said method comprising lubricating said clutch with a power transmission fluid comprising a major amount of a lubricating oil and a minor amount of an additive composition, said additive composition comprising:

(i) 0.1 to 10.0 mass percent, per mass of the fluid of a compound of structure (I):

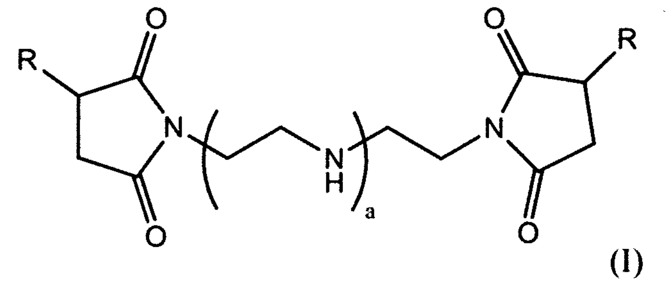

(I)

wherein a is an integer from 1 to 10 and R is a hydrocarbon group made by the metallocene-catalysed polymerisation of an alphaolefin feedstock, said feedstock being 1-octene, 1-decene, 1-dodecene or any mixture thereof;
(ii) 0.1 to 10.0 mass percent, per mass of the fluid of a friction modifier of structure (II):

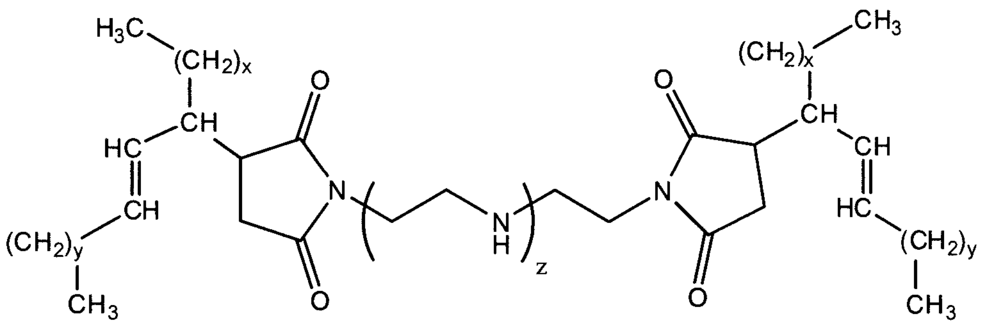

(II)

wherein x + y is from 8 to 15, and z = 0 or an integer from 1 to 5; and
(iii) an oil-soluble phosphorus compound comprising one or more compounds of the structures:

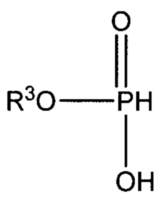
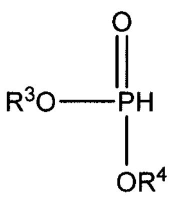
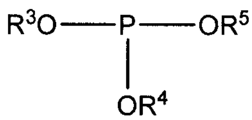

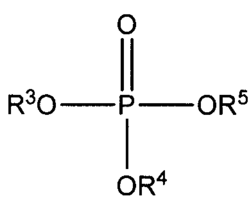

wherein groups $R^3$, $R^4$ and $R^5$ may be the same or different hydrocarbyl groups, or aryl groups, or linear alkyl groups optionally containing a thioether linkage and optionally where one or more of the oxygen atoms in the above structures may be replaced by a sulfur atom, in an amount such as to provide the power transmitting

fluid with from 10 to 1000 parts per million by mass (ppm) of elemental phosphorus, per mass of the fluid.

**2.** A method according to claim 1 wherein the wet clutch is a slipping torque convertor clutch.

**3.** A method according to claim 1 or claim 2 wherein groups $R^3$ and $R^4$ and $R^5$ are linear alkyl groups optionally containing a thioether linkage.

**4.** A method according to claim 3 wherein groups $R^3$ and $R^4$ and $R^5$ are each independently selected from 3-thio-heptyl, 3-thio-nonyl, 3-thio-undecyl, 3-thio-tridecyl, 5-thio-hexadecyl and 8-thio-octadecyl.

**5.** A method according to any preceding claim wherein said additive composition further comprises an ashless dispersant (iv).

**6.** A method according to claim 5 wherein said ashless dispersant (iv) comprises one or more of polyisobutenyl succinimide, polyisobutenyl succinamide, mixed ester/amide of a polyisobutenyl-substituted succinic acid, hydroxyester of a polyisobutenyl-substituted succinic acid, Mannich condensation product of one or more hydrocarbyl-substituted phenols, formaldehyde and one or more polyamines, or a mixture thereof.

**7.** A transmission fluid comprising a major amount of a lubricating oil and a minor amount of an additive composition, wherein the additive composition comprises (i) 0.1 to 10.0 mass percent, per mass of the fluid of a compound of structure (I):

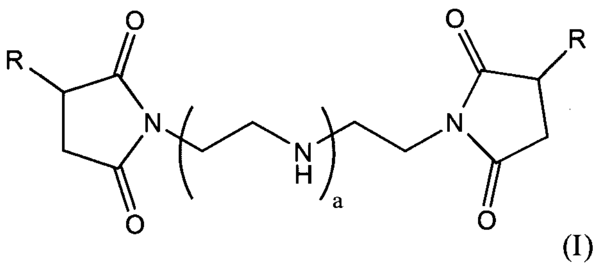

(I)

wherein a is an integer from 1 to 10 and R is a hydrocarbon group made by the metallocene-catalysed polymerisation of an alphaolefin feedstock, said feedstock being 1-octene, 1-decene, 1-dodecene or any mixture thereof; (ii) 0.1 to 10.0 mass percent, per mass of the fluid of a friction modifier of structure (II):

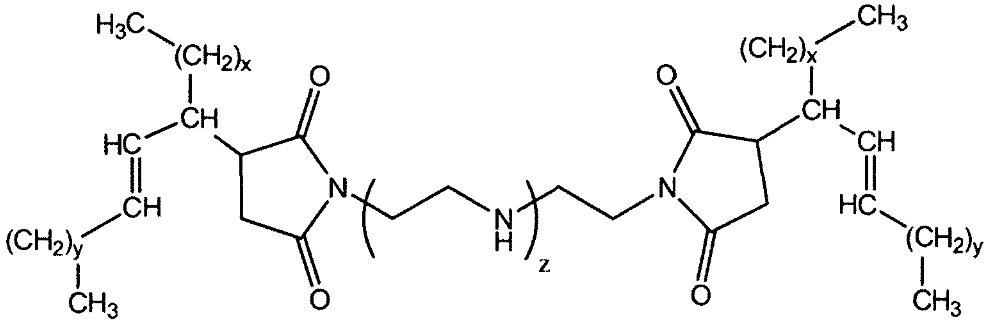

(II)

wherein x + y is from 8 to 15, and z = 0 or an integer from 1 to 5; and (iii) an oil-soluble phosphorus compound comprising one or more compounds of the structures:

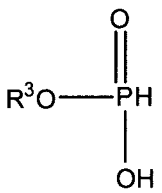

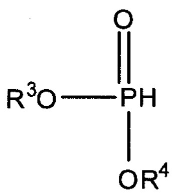

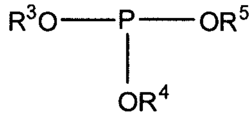

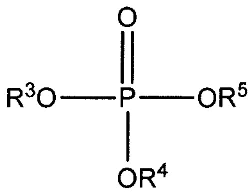

wherein groups $R^3$, $R^4$ and $R^5$ may be the same or different hydrocarbyl groups, or aryl groups, or linear alkyl groups optionally containing a thioether linkage and optionally where one or more of the oxygen atoms in the above structures may be replaced by a sulfur atom, in an amount such as to provide the power transmitting fluid with from 10 to 1000 parts per million by mass (ppm) of elemental phosphorus, per mass of the fluid.

**8.** A transmission fluid according to claim 7 wherein groups $R^3$ and $R^4$ and $R^5$ are linear alkyl groups optionally containing a thioether linkage.

**9.** A transmission fluid according to claim 8 wherein groups $R^3$ and $R^4$ and $R^5$ are each independently selected from 3-thio-heptyl, 3-thio-nonyl, 3-thio-undecyl, 3-thio-tridecyl, 5-thio-hexadecyl and 8-thio-octadecyl.

**10.** A transmission fluid according to any of claims 7 to 9 wherein said additive composition further comprises an ashless dispersant (iv).

**11.** A transmission fluid according to claim 10 wherein said ashless dispersant (iv) comprises one or more of polyisobutenyl succinimide, polyisobutenyl succinamide, mixed ester/amide of a polyisobutenyl-substituted succinic acid, hydroxyester of a polyisobutenyl-substituted succinic acid, Mannich condensation product of one or more hydrocarbyl-substituted phenols, formaldehyde and one or more polyamines, or a mixture thereof.

**12.** The use of a transmission fluid comprising a major amount of a lubricating oil and a minor amount of an additive composition, the additive composition comprising:

(i) 0.1 to 10.0 mass percent, per mass of the fluid of a compound of structure (I):

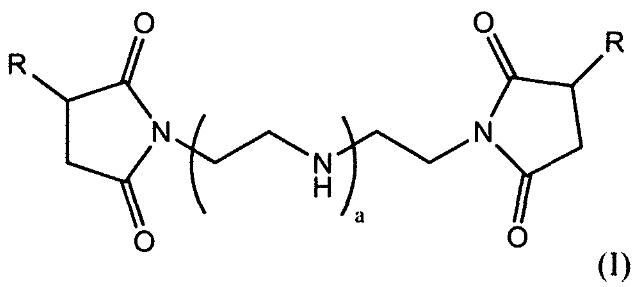

(I)

wherein a is an integer from 1 to 10 and R is a hydrocarbon group made by the metallocene-catalysed polymerisation of an alphaolefin feedstock, said feedstock being 1-octene, 1-decene, 1-dodecene or any mixture thereof;

(ii) 0.1 to 10.0 mass percent, per mass of the fluid of a friction modifier of structure (II):

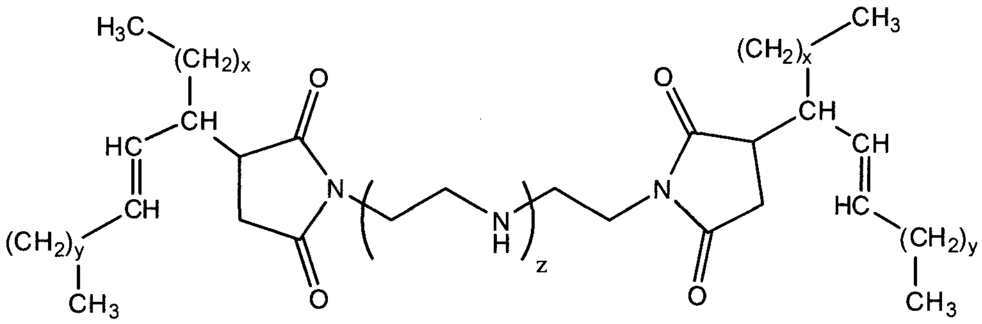

(II)

wherein x + y is from 8 to 15, and z = 0 or an integer from 1 to 5; and

(iii) an oil-soluble phosphorus compound comprising one or more compounds of the structures:

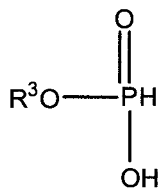

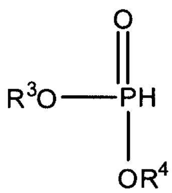

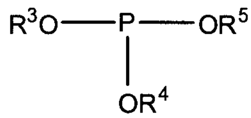

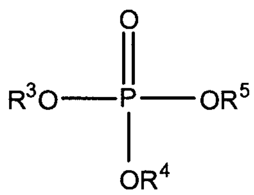

wherein groups $R^3$, $R^4$ and $R^5$ may be the same or different hydrocarbyl groups, or aryl groups, or linear alkyl groups optionally containing a thioether linkage and optionally where one or more of the oxygen atoms in the above structures may be replaced by a sulfur atom, in an amount such as to provide the power transmitting fluid with from 10 to 1000 parts per million by mass (ppm) of elemental phosphorus, per mass of the fluid;to improve the dynamic friction performance of a wet clutch lubricated by the transmission fluid.

**13.** The use according to claim 12 wherein said additive composition further comprises an ashless dispersant (iv).

**Patentansprüche**

**1.** Verfahren zum Verbessern der dynamischen Reibleistung einer Nasskupplung, bei dem die Kupplung mit einer Kraftübertragungsflüssigkeit geschmiert wird, die eine größere Menge Schmieröl und eine geringere Menge Additivzusammensetzung umfasst, wobei die Additivzusammensetzung

(i) 0,1 bis 10,0 Massenprozent, bezogen auf die Masse der Flüssigkeit, von einer Verbindung mit der Struktur (I):

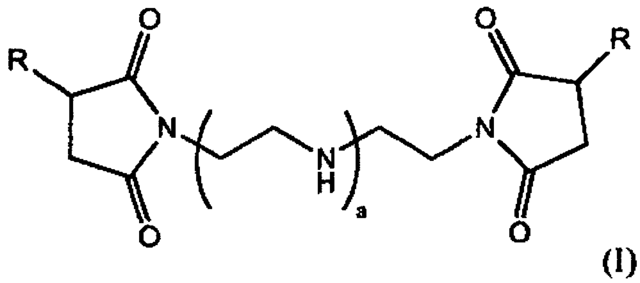

(I)

,

in der a eine ganze Zahl von 1 bis 10 ist und R eine Kohlenwasserstoffgruppe ist, die durch Metallocen-katalysierte Polymerisation von alpha-Olefineinsatzmaterials hergestellt ist, wobei das Einsatzmaterial 1-Octen, 1-Decen, 1-Dodecen oder eine beliebige Mischung davon ist;
(ii) 0,1 bis 10,0 Massenprozent, bezogen auf die Masse der Flüssigkeit, Reibungsmodifizierungsmittel mit der Struktur (II):

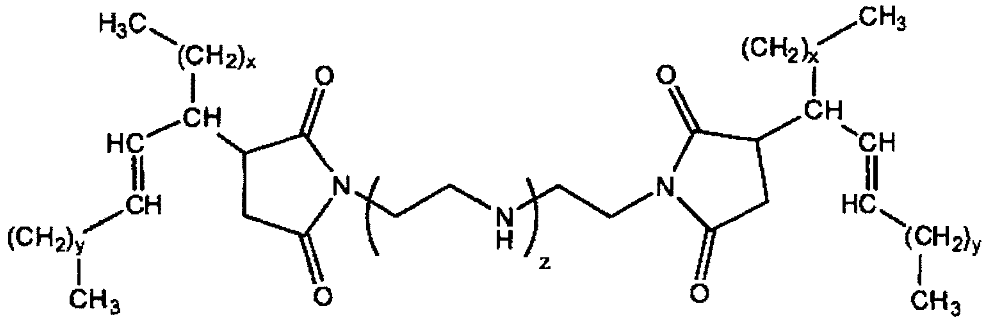

(II)

in der x + y 8 bis 15 sind, und z = 0 oder eine ganze Zahl von 1 bis 5 ist; und
(iii) öllösliche Phosphorverbindung, die eine oder mehrere Verbindungen mit den folgenden Strukturen:

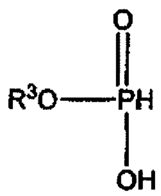

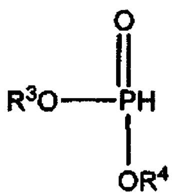

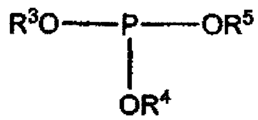

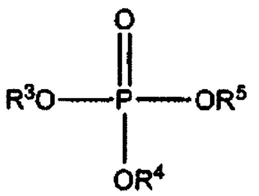

,

umfasst, worin die Gruppen $R^3$, $R^4$ und $R^5$ die gleichen oder unterschiedliche Kohlenwasserstoffgruppen oder Arylgruppen oder lineare Alkylgruppen sein können, die gegebenenfalls eine Thioetherbindung enthalten, und wobei gegebenenfalls ein oder mehrere der Sauerstoff atome in den obigen Strukturen durch ein Schwefelatom ersetzt sein können, in einer Menge umfasst, so dass die Kraftübertragungsflüssigkeit mit 10 bis 1000 Massen-ppm an elementarem Phosphor, bezogen auf die Masse der Flüssigkeit, ausgestattet wird.

**2.** Verfahren nach Anspruch 1, bei dem die Nasskupplung eine Drehmomentwandler-Rutschkupplung ist.

**3.** Verfahren nach Anspruch 1 oder Anspruch 2, bei dem die Gruppen $R^3$ und $R^4$ und $R^5$ lineare Alkylgruppen sind,

die gegebenenfalls eine Thioetherbindung enthalten.

4. Verfahren nach Anspruch 3, bei dem die Gruppen $R^3$ und $R^4$ und $R^5$ jeweils unabhängig ausgewählt sind aus 3-Thioheptyl, 3-Thiononyl, 3-Thioundecyl, 3-Thiotridecyl, 5-Thiohexadecyl und 8-Thiooctadecyl.

5. Verfahren nach einem der vorhergehenden Ansprüche, bei dem die Additivzusammensetzung des Weiteren ein aschefreies Dispergiermittel (iv) umfasst.

6. Verfahren nach Anspruch 5, bei dem das aschefreie Dispergiermittel (iv) ein oder mehrere von Polyisobutenylsuccinimid, Polyisobutenylsuccinamid, gemischtem Ester/Amid einer polyisobutenylsubstituierten Bernsteinsäure, Hydroxyester einer polyisobutenylsubstituierten Bernsteinsäure, Mannich-Kondensationsprodukt von einem oder mehreren kohlenwasserstoffsubstituierten Phenolen, Formaldehyd und einem oder mehreren Polyaminen, oder eine Mischung davon umfasst.

7. Übertragungsflüssigkeit, die eine größere Menge Schmieröl und eine geringere Menge Additivzusammensetzung umfasst, wobei die Additivzusammensetzung (i) 0,1 bis 10,0 Massenprozent, bezogen auf die Masse der Flüssigkeit, von einer Verbindung der Struktur (I):

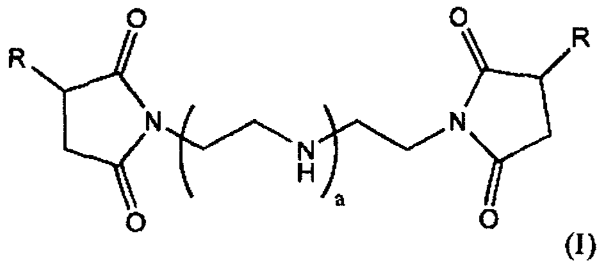

(I) ,

in der a eine ganze Zahl von 1 bis 10 ist und R eine Kohlenwasserstoffgruppe ist, die durch Metallocen-katalysierte Polymerisation von alpha-Olefineinsatzmaterial hergestellt ist, wobei das Einsatzmaterial 1-Octen, 1-Decen, 1-Dodecen oder eine beliebige Mischung davon ist; (ii) 0,1 bis 10,0 Massenprozent, bezogen auf die Masse der Flüssigkeit, Reibungsmodifizierungsmittel mit der Struktur (II):

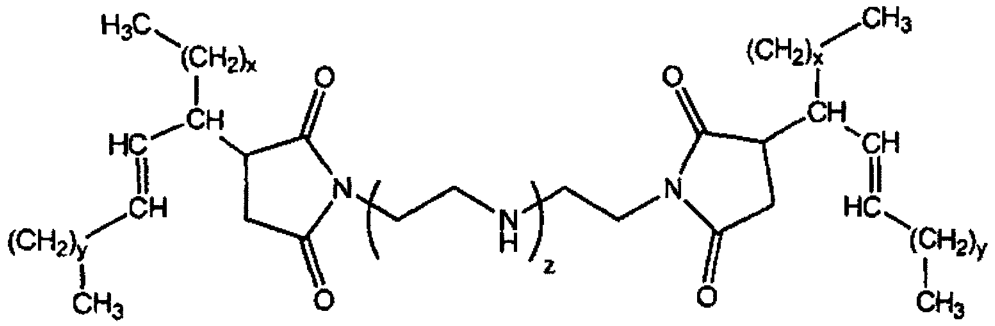

(II) ,

in der x + y 8 bis 15 sind, und z = 0 oder eine ganze Zahl von 1 bis 5 ist; und (iii) öllösliche Phosphorverbindung, die eine oder mehrere Verbindungen mit den folgenden Strukturen:

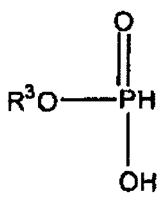

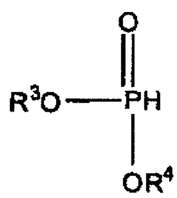

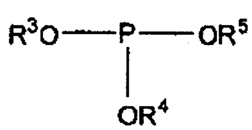

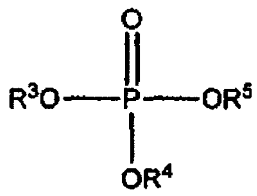

umfasst, worin die Gruppen $R^3$, $R^4$ und $R^5$ die gleichen oder unterschiedliche Kohlenwasserstoffgruppen oder Arylgruppen oder lineare Alkylgruppen sein können, die gegebenenfalls eine Thioetherbindung enthalten, und wobei gegebenenfalls ein oder mehrere der Sauerstoffatome in den obigen Strukturen durch ein Schwefelatom ersetzt sein können, in einer Menge umfasst, so dass die Kraftübertragungsflüssigkeit mit 10 bis 1000 Massen-ppm an elementarem Phosphor, bezogen auf die Masse der Flüssigkeit, ausgestattet wird.

**8.** Übertragungsflüssigkeit nach Anspruch 7, bei der die Gruppen $R^3$ und $R^4$ und $R^5$ lineare Alkylgruppen sind, die gegebenenfalls eine Thioetherbindung enthalten.

**9.** Übertragungsflüssigkeit nach Anspruch 8, bei der die Gruppen $R^3$ und $R^4$ und $R^5$ jeweils unabhängig ausgewählt sind aus 3-Thio-heptyl, 3-Thiononyl, 3-Thioundecyl, 3-Thiotridecyl, 5-Thiohexadecyl und 8-Thiooctadecyl.

**10.** Übertragungsflüssigkeit nach einem der Ansprüche 7 bis 9, bei der die Additivzusammensetzung des Weiteren aschefreies Dispergiermittel (iv) umfasst.

**11.** Übertragungsflüssigkeit nach Anspruch 10, bei der das aschefreie Dispergiermittel (iv) ein oder mehrere von Polyisobutenylsuccinimid, Polyisobutenylsuccinamid, gemischtem Ester/Amid von polyisobutenylsubstituierter Bernsteinsäure, Hydroxyester von polyisobutenylsubstituierter Bernsteinsäure, Mannich-Kondensationsprodukt von einem oder mehreren kohlenwasserstoffsubstituierten Phenolen, Formaldehyd und einem oder mehreren Polyaminen, oder eine Mischung davon umfasst.

**12.** Verwendung einer Übertragungsflüssigkeit, die eine größere Menge Schmieröl und eine geringere Menge Additivzusammensetzung umfasst, wobei die Additivzusammensetzung

(i) 0,1 bis 10,0 Massenprozent, bezogen auf die Masse der Flüssigkeit, von einer Verbindung mit der Struktur (I):

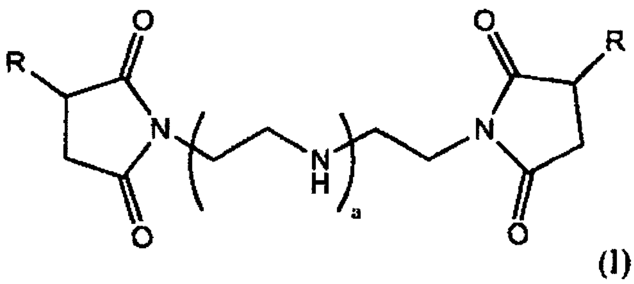

(I) ,

in der a eine ganze Zahl von 1 bis 10 ist und R eine Kohlenwasserstoffgruppe ist, die durch Metallocen-katalysierte Polymerisation von alpha-Olefineinsatzmaterial hergestellt ist, wobei das Einsatzmaterial 1-Octen, 1-Decen, 1-Dodecen oder jedwede Mischung davon ist;
(ii) 0,1 bis 10,0 Massenprozent, bezogen auf die Masse der Flüssigkeit, Reibungsmodifizierungsmittel mit der Struktur (II):

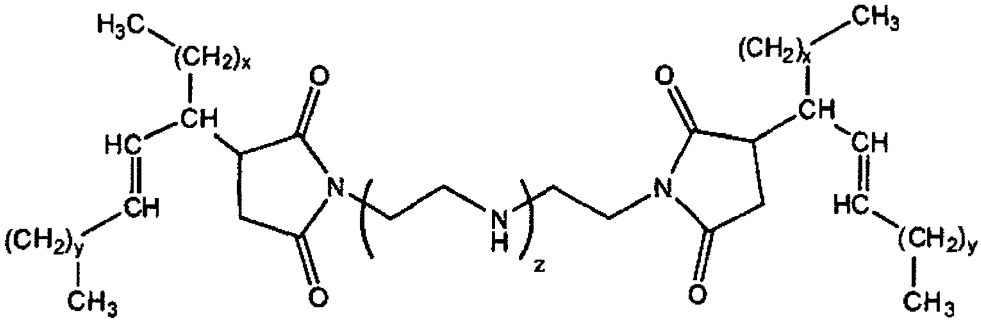

(II) ,

in der x + y 8 bis 15 sind, und z = 0 oder eine ganze Zahl von 1 bis 5 ist; und

(iii) öllösliche Phosphorverbindung, die eine oder mehrere Verbindungen mit den folgenden Strukturen:

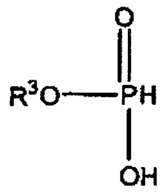

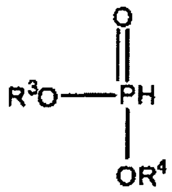

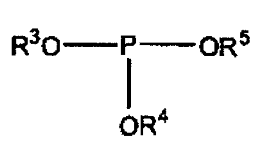

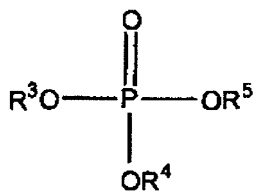

umfasst, worin die Gruppen $R^3$, $R^4$ und $R^5$ die gleichen oder unterschiedliche Kohlenwasserstoffgruppen oder Arylgruppen oder lineare Alkylgruppen sein können, die gegebenenfalls eine Thioetherbindung enthalten, und wobei gegebenenfalls ein oder mehrere der Sauerstoffatome in den obigen Strukturen durch ein Schwefelatom ersetzt sein können, in einer Menge umfasst, so dass die Kraftübertragungsflüssigkeit mit 10 bis 1000 Massen-ppm an elementarem Phosphor, bezogen auf die Masse der Flüssigkeit, ausgestattet wird, um die dynamische Reibleistung einer Nasskupplung zu verbessern, die durch die Übertragungsflüssigkeit geschmiert wird.

**13.** Verwendung nach Anspruch 12, bei der die Additivzusammensetzung des Weiteren aschefreies Dispergiermittel (iv) umfasst.

## Revendications

**1.** Procédé d'amélioration des performances de frottement dynamique d'un embrayage humide, ledit procédé comprenant la lubrification dudit embrayage avec un fluide de transmission de puissance comprenant une quantité majeure d'une huile lubrifiante et une quantité mineure d'une composition d'additifs, ladite composition d'additifs comprenant :

(i) 0,1 à 10 % en masse, par masse du fluide d'un composé de structure (I) :

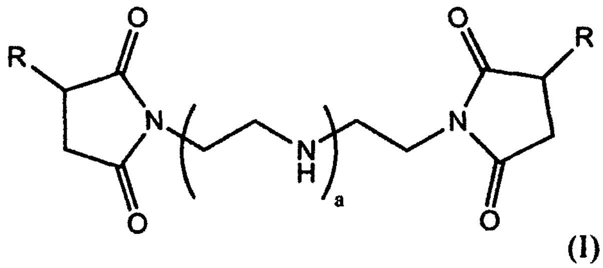

(I)

dans laquelle a est un nombre entier de 1 à 10 et R est un groupe hydrocarboné constitué par la polymérisation catalysée par métallocène d'une matière première alphaoléfine, ladite matière première étant le 1-octène, le 1-décène, le 1-dodécène ou un quelconque de leurs mélanges ;

(ii) 0,1 à 10,0 pour cent en masse, par masse du fluide d'un modificateur de frottement de structure (II) :

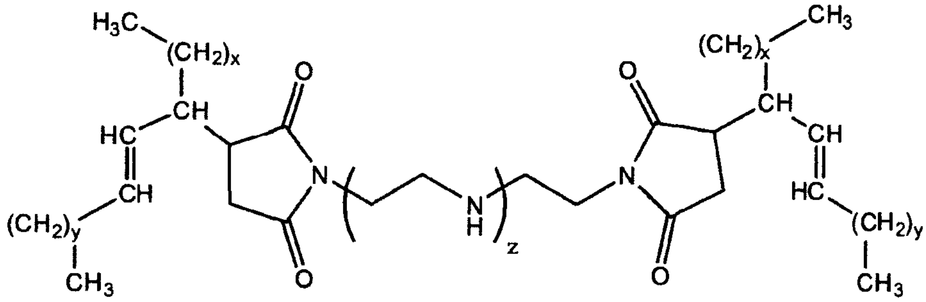

(II)

dans laquelle x + y vaut de 8 à 15, et z = 0 ou un nombre entier de 1 à 5 ; et

(iii) un composé phosphore soluble dans l'huile comprenant un ou plusieurs composés des structures :

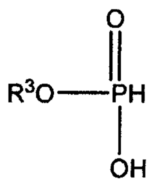

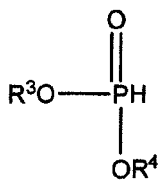

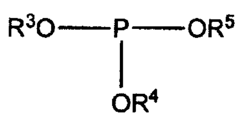

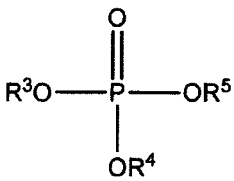

dans lesquelles les groupes $R^3$, $R^4$ et $R^5$ peuvent être des groupes hydrocarbyle identiques ou différents, ou des groupes aryle, ou des groupe alkyle linéaires contenant éventuellement une liaison thioéther et éventuellement où un ou plusieurs des atomes d'oxygène dans les structures ci-dessus peuvent être remplacés par un atome de soufre, en une quantité telle qu'elle fournit au fluide de transmission de puissance de 10 à 1000 parties par million par masse (ppm) de phosphore élémentaire, par masse du fluide.

**2.** Procédé selon la revendication 1, dans lequel l'embrayage humide est un embrayage à convertisseur de couple de freinage.

**3.** Procédé selon la revendication 1 ou la revendication 2, dans lequel les groupes $R^3$ et $R^4$ et $R^5$ sont des groupes alkyle linéaires contenant éventuellement une liaison thioéther.

**4.** Procédé selon la revendication 3, dans lequel les groupes $R^3$ et $R^4$ et $R^5$ sont chacun choisis indépendamment

parmi le 3-thio-heptyle, le 3-thio-nonyle, le 3-thio-undécyle, le 3-thio-tridécyle, le 5-thio-hexadécyle et le 8-thio-octadécyle.

**5.** Procédé selon l'une quelconque des revendications précédentes, dans lequel ladite composition d'additifs comprend en outre un dispersant sans cendres (iv).

**6.** Procédé selon la revendication 5, dans lequel ledit dispersant sans cendres (iv) comprend un ou plusieurs parmi le polyisobuténylsuccinimide, le polyisobuténylsuccinamide, un ester/amide mixte d'un acide succinique substitué par un polyisobutényle, un hydroxyester d'un acide succinique substitué par un polyisobutényle, le produit de condensation de Mannich d'un ou plusieurs phénols substitués par un hydrocarbyle, du formaldéhyde et d'une ou plusieurs polyamines, ou d'un de leurs mélanges.

**7.** Fluide de transmission comprenant une quantité majeure d'une huile lubrifiante et une quantité mineure d'une composition d'additifs, dans lequel la composition d'additifs comprend (i) de 0,1 à 10,0 pour cent en masse, par masse du fluide d'un composé de structure (I) :

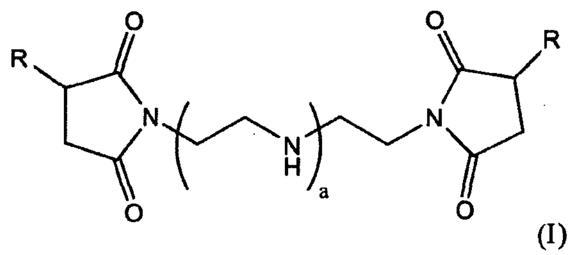

(I)

dans laquelle a est un nombre entier de 1 à 10 et R est un groupe hydrocarboné constitué par la polymérisation catalysée par métallocène d'une matière première alphaoléfine, ladite matière première étant le 1-octène, le 1-décène, le 1-dodécène ou un quelconque de leurs mélanges ; (ii) 0,1 à 10,0 pour cent en masse, par masse du fluide d'un modificateur de frottement de structure (II) :

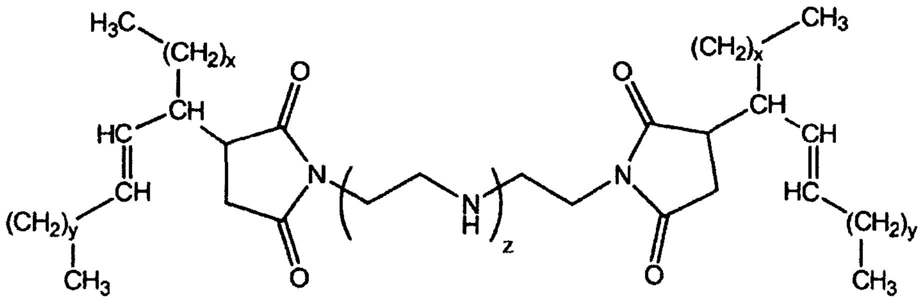

(II)

dans laquelle x + y vaut de 8 à 15, et z = 0 ou un nombre entier de 1 à 5 ; et (iii) un composé phosphore soluble dans l'huile comprenant un ou plusieurs composés des structures :

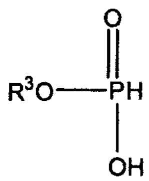

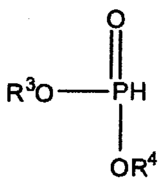

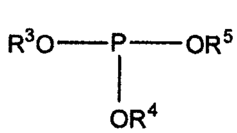

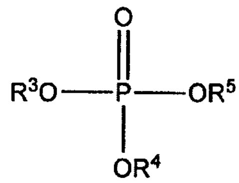

dans lesquelles les groupes $R^3$, $R^4$ et $R^5$ peuvent être des groupes hydrocarbyle identiques ou différents, ou des groupes aryle, ou des groupe alkyle linéaires contenant éventuellement une liaison thioéther et éventuellement où un ou plusieurs des atomes d'oxygène dans les structures ci-dessus peuvent être remplacés par un atome de soufre, en une quantité telle qu'elle fournit au fluide de transmission de puissance de 10 à 1000 parties par million par masse (ppm) de phosphore élémentaire, par masse du fluide.

**8.** Fluide de transmission selon la revendication 7, dans lequel les groupes $R^3$ et $R^4$ et $R^5$ sont des groupes alkyle linéaires contenant éventuellement une liaison thioéther.

**9.** Fluide de transmission selon la revendication 8, dans lequel les groupes $R^3$, $R^4$ et $R^5$ sont chacun choisis indépendamment parmi le 3-thio-heptyle, le 3-thio-nonyle, le 3-thio-undécyle, le 3-thio-tridécyle, le 5-thio-hexadécyle et le 8-thio-octadécyle.

**10.** Fluide de transmission selon l'une quelconque des revendications 7 à 9, dans lequel ladite composition d'additifs comprend en outre un dispersant sans cendres (iv).

**11.** Fluide de transmission selon la revendication 10, dans lequel ledit dispersant sans cendres (iv) comprend un ou plusieurs parmi le polyisobuténylsuccinimide, le polyisobuténylsuccinamide, un ester/amide mixte d'un acide succinique substitué par un polyisobutényle, un hydroxyester d'un acide succinique substitué par un polyisobutényle, le produit de condensation de Mannich d'un ou plusieurs phénols substitués par un hydrocarbyle, du formaldéhyde et d'une ou plusieurs polyamines, ou un de leurs mélanges.

**12.** Utilisation d'un fluide de transmission comprenant une quantité majeure d'une huile lubrifiante et une quantité mineure d'une composition d'additifs, la composition d'additifs comprenant :

(i) 0,1 à 10,0 pour cent en masse, par masse du fluide d'un composé de structure (I) :

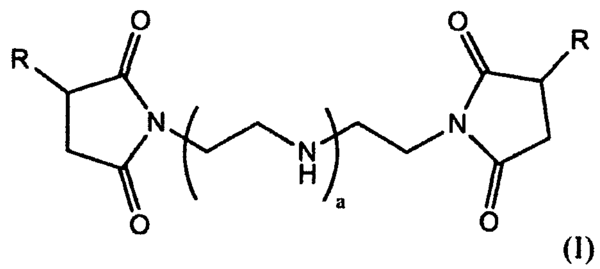

(I)

dans laquelle a est un nombre entier de 1 à 10 et R est un groupe hydrocarboné constitué par la polymérisation catalysée par métallocène d'une matière première alphaoléfine, ladite matière première étant le 1-octène, le 1-décène, le 1-dodécène ou un quelconque de leurs mélanges ;
(ii) 0,1 à 10,0 pour cent en masse, par masse du fluide d'un modificateur de frottement de structure (II) :

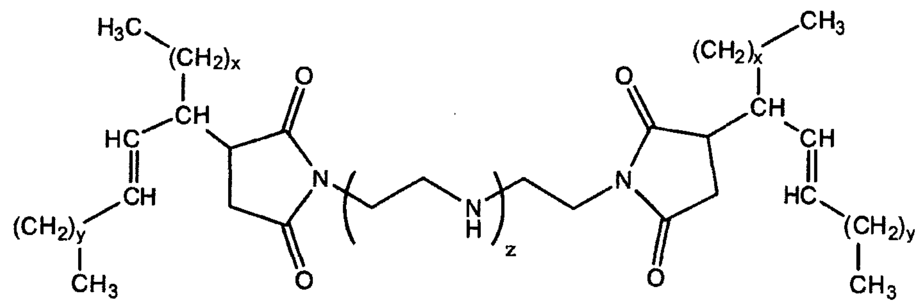

(II)

dans laquelle x + y vaut de 8 à 15, et z = 0 ou un nombre entier de 1 à 5 ; et

(iii) un composé phosphore soluble dans l'huile comprenant un ou plusieurs composés des structures :

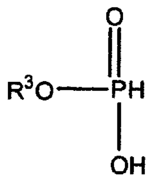

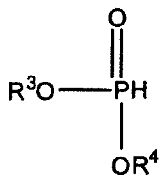

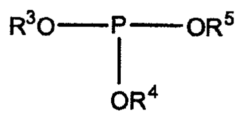

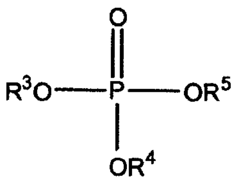

dans lesquelles les groupes $R^3$, $R^4$ et $R^5$ peuvent être des groupes hydrocarbyle identiques ou différents, ou des groupes aryle, ou des groupe alkyle linéaires contenant éventuellement une liaison thioéther et éventuellement où un ou plusieurs des atomes d'oxygène dans les structures ci-dessus peuvent être remplacés par un atome de soufre, en une quantité telle qu'elle fournit au fluide de transmission de puissance de 10 à 1000 parties par million par masse (ppm) de phosphore élémentaire, par masse du fluide ; pour améliorer les performances de frottement dynamique d'un embrayage humide lubrifié par le fluide de transmission.

**13.** Utilisation selon la revendication 12, dans laquelle ladite composition d'additifs comprend en outre un dispersant sans cendres (iv).

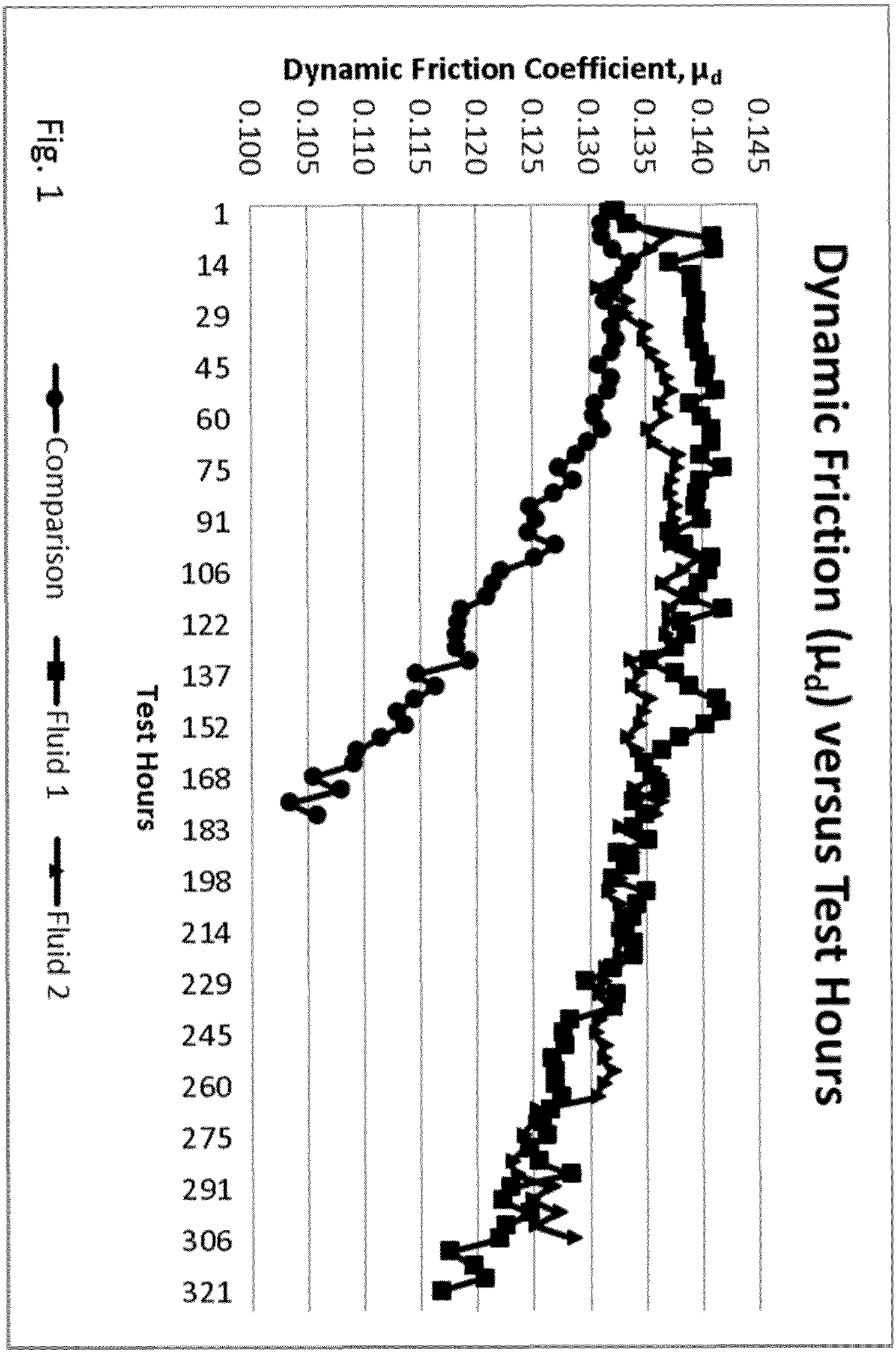

Dynamic Friction ($\mu_d$) versus Test Hours
Dynamic Friction Coefficient, $\mu_d$
0.100
0.105
0.110
0.115
0.120
0.125
0.130
0.135
0.140
0.145
Test Hours
1
14
29
45
60
75
91
106
122
137
152
168
183
198
214
229
245
260
275
291
306
321
Comparison
Fluid 1
Fluid 2


Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5840662 A
- US 5840663 A
- US 8399390 B
- US 20120264665 A1
- US 20090005277 A
- US 5185090 A
- US 5242612 A
- US 4873009 A
- US 3254025 A
- US 3502677 A
- US 4857214 A
- US 2719125 A
- US 2719126 A
- US 3087937 A
- US 2760933 A
- US 2836564 A
- US 3663561 A


### Non-patent literature cited in the description


- **C.V. SMALLHEER ; R. KENNEDY SMITH.** *Lubricant Additives,* 1967, 1-11
- Anti-Shudder Durability of Automatic Transmission Fluids: Mechanism of the Loss of Shudder Control. **R.F. WATTS ; R.K. NIBERT ; M. TANDON.** 10th International Colloquium on Tribology. Technische Akademie Esslingen, January 1996